# EUROPÄISCHE PATENTSCHRIFT

(11) **EP 0 982 912 B1**
(45) Veröffentlichungstag und Bekanntmachung des Hinweises auf die Patenterteilung: **19.07.2006**
(21) Anmeldenummer: 99110118.9
(22) Anmeldetag: 25.05.1999
(51) Int. Cl.: H04M 1/00, H04M 1/247

(54) **Telefon mit Bedienerführung für analoge Anschlussleitungen**
Telephone with user guidance for analog connection lines
Téléphone avec assistance d'utilisation pour des lignes de raccordement analogiques

(30) Priorität: 24.08.1998 DE 19838098
(43) Veröffentlichungstag der Anmeldung: 01.03.2000
(73) Patentinhaber: Deutsche Telekom AG, 53113 Bonn (DE)
(72) Erfinder: Czemetzki Peter, 64354 Reinheim (DE); Köhler, Klaus, 63785 Obernburg (DE); Holderried, Harry, 64367 Mühltal (DE); Böhlert, Gunter Timm, 64295 Darmstadt (DE); Barth, Uwe, 64747 Breuberg (DE)
(74) Vertreter: Gornott, Dietmar

(56) Entgegenhaltungen:
- DE-A- 3 112 475
- GB-A- 2 276 520
- GB-A- 2 285 897

## Beschreibung

Die Erfindung betrifft ein Telefon für analoge Anschlußleitungen eines Telekommunikationsnetzes mit einem Display, einer als Programm eines Mikroprozessors ausgebildeten Bedienerführung, welche dem Benutzer verschiedene Auswahllisten (Menüs) darbietet, mindestens einer Auswahltaste zur Auswahl eines Menüpunktes und einer Bestätigungstaste zur Aktivierung der durch den ausgewählten Menüpunkt bezeichneten Funktion.

Mit zunehmender Anzahl von Komfortmerkmalen sowohl der Telefone als auch der Telekommunikationsnetze wurden bei Telefonen zur Erleichterung der Bedienung menügesteuerte Bedienerführungen eingeführt. Beim ISDN werden über den D-Kanal verschiedene Informationen über den jeweiligen Netzzustand zum Endgerät übertragen, beispielsweise, ob der angerufene Teilnehmer besetzt ist oder ob der angerufene Teilnehmer das Gespräch angenommen hat. Der Benutzer eines ISDN-Telefons steht somit nicht vor der schwierigen Aufgabe, aus der Vielzahl aller insgesamt vorhandenen Menüpunkte diejenigen Funktionen auszuwählen, welche in dem jeweiligen Zustand des Netzes und des Telefons sinnvoll bzw. durchführbar sind.

Bei analogen Netzen sind ebenfalls Übertragungsverfahren für Informationen über den jeweiligen Netzzustand bekannt geworden, beispielsweise ADSI und DSCWID, unter anderem durch GB 2 285 897 A. Solche Übertragungsverfahren sind jedoch nicht bei allen Netzen eingeführt. Selbst bei Netzen, die über eine Reihe von Komfortmerkmalen verfügen, wie beispielsweise das sogenannte T-Net der Deutsche Telekom AG, werden solche Rückmeldungen nicht oder nur in einer Form übertragen, die im Endgerät (Telefon) nicht einfach und zuverlässig ausgewertet werden können.

Aus DE 31 12 475 Al ist ein für analoge Anschlußleitungen vorgesehener Fernsprechapparat bekannt, bei dem verschiedene Menüs durch entsprechende Bedieneingaben aufrufbar sind, mit deren Hilfe dann Funktionen, wie Kurzwahl, Rückfrage, Anklopfen, Lauthören, Makeln und Konferenz, aktiviert werden können. Die Menüs werden durch Bedieneingaben aufgerufen, was insbesondere ungeübten Benutzern Schwierigkeiten bereitet.

Aufgabe der vorliegenden Erfindung ist es daher, ein Telefon für analoge Anschlußleitungen eines Telekommunikationsnetzes mit einer vorteilhaften Bedienerführung anzugeben. Dabei soll die Bedienerführung weitgehend an den durch das ISDN möglich gewordenen Standard angepaßt werden.

Diese Aufgabe wird erfindungsgemäß dadurch gelöst, daß vor Wahl einer Rufnummer ein erstes Menü bereitsteht, das Menüpunkte zur Wahlvorbereitung und zur Einstellung verschiedener Parameter des Telefons enthält, und daß sowohl nach Wahl einer Rufnummer als auch nach Annahme eines Anrufs ein zweites Menü bereitsteht, das unabhängig vom Zustand des Telekommunikationsnetzes Menüpunkte zu Funktionen enthält, die bei besetztem angerufenem Teilnehmer, während des Rufes bei freiem angerufenem Teilnehmer oder während eines Gesprächs ausgewählt werden können.

Das erfindungsgemäße Telefon kann in vorteilhafter Weise in Verbindung mit herkömmlichen analogen Telefonnetzen betrieben werden. Die Vorteile werden jedoch dann besonders deutlich, wenn sogenannte Komfortmerkmale, wie Gesprächsannahme während des Haltens eines ersten Gespräches, Gesprächswechsel und Konferenzschaltung, insbesondere Dreierkonferenzschaltung, vom Netz bereitgestellt werden.

An sich können die jeweils erfindungsgemäß bereitgestellten Menüs unmittelbar auf dem Display angezeigt werden. Dies würde den Benutzer jedoch häufig verwirren und insbesondere bei einzeiligen Displays andere Informationen, wie beispielsweise die Rufnummer des gerufenen Teilnehmers, verdecken. Bei einer Weiterbildung ist daher vorgesehen, daß das jeweils bereitgestellte Menü durch eine Aufruftaste auf dem Display sichtbar gemacht werden kann. Bei geeignetem Platzangebot auf dem Display kann dabei jedoch vorgesehen sein, daß auf dem Display angezeigt wird, welches der Menüs nach Betätigung der Aufruftaste sichtbar wird.

Eine andere Weiterbildung der Erfindung besteht darin, daß das zweite Menü erst dann bereitsteht, wenn nach Wahl einer Ziffer eine vorgegebene Zeit abgelaufen ist. Damit wird sichergestellt, daß der Wechsel auf das zweite Menü nicht bereits nach einer Wahlpause erfolgt. Außerdem hat dabei der Benutzer die Möglichkeit, unmittelbar nach der Wahl noch auf das erste Menü zurückzugreifen, um eine Einstellung vorzunehmen, beispielsweise eine automatische Wahlwiederholung zu aktivieren.

In gleichfalls vorteilhafter Weise kann bei dem erfindungsgemäßen Telefon für den Fall eines ankommenden Anrufs vorgesehen sein, daß das zweite Menü erst bereitsteht, wenn nach Annahme eines Anrufs eine vorgegebene Zeit abgelaufen ist.

Je nach weiterem Betriebszustand des Telefons können noch andere Menüs aufgerufen werden. So ist beispielsweise bei einer vorteilhaften Ausgestaltung vorgesehen, daß ein drittes Menü bereitsteht, wenn eine Rückfrage eingeleitet ist. Dadurch kann der Benutzer nicht nur die im Rahmen der Rückfrage anzuwählende Rufnummer manuell eingeben, sondern auch auf vorhandene Dateien, wie Anruferliste, Wahlwiederholliste und Telefonbuch zurückgreifen. Dieses ist besonders vorteilhaft bei einer Rückfrage über das öffentliche Telekommunikationsnetz, da hier die üblichen vielstelligen Rufnummern zu wählen sind.

Ferner werden die komplizierten Bedienvorgänge nach dem Aufbau einer Rückfrageverbindung oder bei einer Telefonkonferenz dadurch erleichtert, daß nach Wahl einer Rufnummer nach Einleitung einer Rückfrage ein viertes Menü bzw. nach Einrichtung einer Telefonkonferenz ein fünftes Menü bereitsteht.

Eine weitere vorteilhafte Ausgestaltung des erfindungsgemäßen Telefons sieht vor, daß durch mindestens eine vorgegebene Taste mindestens ein weiteres Menü aufrufbar ist. Damit können weitgehend unabhängig vom jeweiligen Zustand des Telefons Menüs aufgerufen werden, beispielsweise ein Menü zur Benutzung des Telefonbuchs, selbst wenn es je nach Ausführung im einzelnen bereits innerhalb des ersten Menüs als Menüpunkt vorgesehen sein sollte. Diese Ausgestaltung kann jedoch auch alternativ vorgesehen sein. Ferner kann ein mit einer vorgegebenen Taste aufrufbares weiteres Menü die Wahl bestimmter Rufnummern erleichtern, beispielsweise Rufnummern der Telefonauskunft (Inland/Ausland), der Störungsstelle oder des Beratungsdienstes des Netzbetreibers.

Ein Ausführungsbeispiel der Erfindung ist in der Zeichnung anhand mehrerer Figuren dargestellt und in der nachfolgenden Beschreibung näher erläutert. Es zeigt:
- Fig. 1: ein Blockschaltbild eines erfindungsgemäßen Telefons und
- Fig. 2: eine schematische Darstellung verschiedener Zustände des Telefons und der dabei bereitgestellten Menüs.

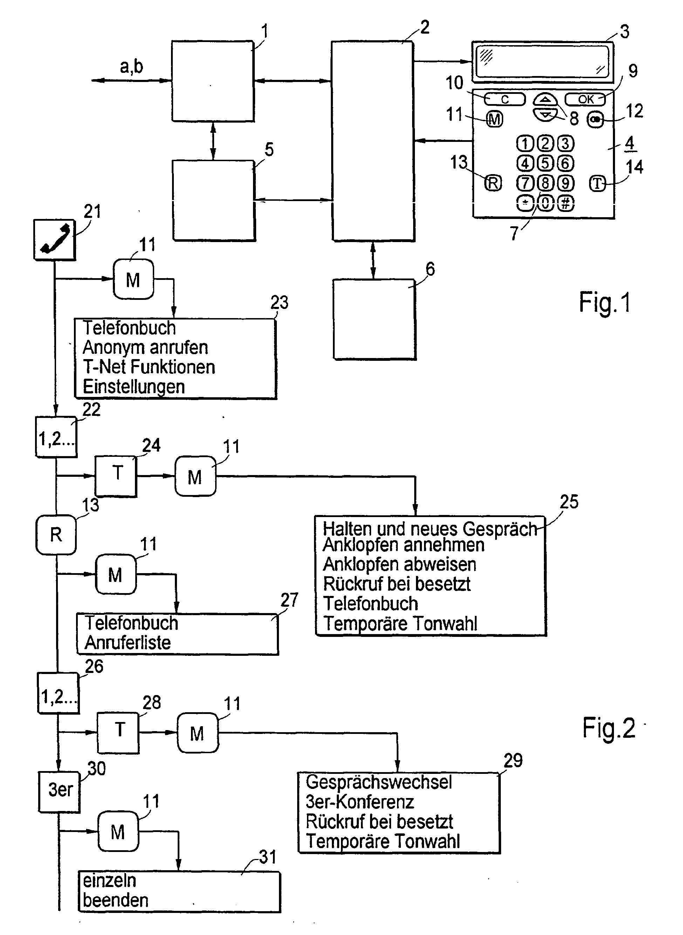

Das in Fig. 1 als Blockschaltbild dargestellte Telefon besteht im wesentlichen aus einem Netzadapter 1 zum Anschluß an ein analoges Netz über die Adern a, b, einem Prozessor 2, einem Display 3, einer Tastatur 4 und Audioeinrichtungen 5. Letztere sind in der Darstellung zu einem Block zusammengefaßt, da eine Erläuterung im einzelnen zum Verständnis der Erfindung nicht erforderlich ist. Der Prozessor 2 enthält Programme zur Bedienung des Telefons sowie zum Erzeugen und Erkennen von Signalen, die als Tonsignale zu Zwecken der Signalisierung dem nicht dargestellten Netz zugeführt oder diesem entnommen werden. Außerdem ist der Prozessor 2 mit einem nichtflüchtigen Speicher 6 verbunden, in dem Einstellungen des Telefons, beispielsweise Lautstärke des Hörers, Art des Wahlverfahrens, sowie ein Telefonbuch, eine Anruferliste und eine Wahlwiederholliste ablegbar sind.

Die Tastatur 4 enthält neben einem Tastenblock 7 Tasten für die Menüsteuerung, nämlich zwei Auswahltasten 8, eine Bestätigungstaste 9, eine Löschtaste 10, eine Taste 11 zum Aufrufen des Menüs sowie eine Wahlwiederholtaste 12. Die Tasten 9 und 10 sind derart angeordnet, daß sie bei anderen Ausführungen des erfindungsgemäßen Telefons als sogenannte Soft-Keys betrieben werden können, wobei auf deren jeweilige Funktion im Display 3 hingewiesen wird. Schließlich zeigt Fig. 1 noch eine Rückfragetaste 13 und eine sogenannte T-Taste 14.

Fig. 2 zeigt in Form eines Ablaufplans mehrere Bedienschritte und Zustände eines erfindungsgemäßen Telefons sowie die dabei jeweils bereitgehaltenen Menüs. Der Übersichtlichkeit halber wurden keine Untermenüs dargestellt und auch keine Abläufe, die von den Menüs zu weiteren Bedienschritten führen, nämlich beispielsweise die Wahl einer Rufnummer aus dem Telefonbuch.

Nach dem Abheben des Hörers bei 21 kann der Benutzer bei 22 eine Rufnummer wählen. Er kann jedoch auch vor der Rufnummernwahl 22 die Menütaste 11 betätigen, worauf ein erstes Menü 23 im Display 3 (Fig. 1) erscheint. Bei einzeiligen Displays bzw. bei Displays, die weniger Zeilen als Menüpunkte darstellen können, werden entsprechend weniger Menüpunkte im Menü dargestellt, so daß die Auswahl mit den Auswahltasten 8 ein Rollen der Menüpunkte durch das Display 3 bewirkt.

Bei einer Betätigung der Menütaste 11 nach Wahl der Rufnummer bei 22 und Ablauf einer vorgegebenen Zeit von beispielsweise 8s bei 24 erscheint auf dem Display das Menü 25. Aus diesem Menü sind diejenigen Funktionen wählbar, die bei besetztem angerufenem Teilnehmer, während des Rufes oder während des Gespräches sinnvoll sind.

Betätigt der Benutzer während des Gesprächs die R-Taste 13, kann er entweder bei 26 für die Rückfrage eine Rufnummer wählen oder durch Betätigen der Menütaste 11 ein Menü 27 aufrufen, das den Benutzer bei der Herstellung der Rückfrageverbindung unterstützt.

Eine vorgegebene Zeit 28 nach der Rufnummernwahl zur Rückfrageverbindung wird angenommen, daß die Rückfrageverbindung steht, worauf nach Betätigen der Menütaste 11 dem Benutzer ein Menü 29 zur Steuerung beider Verbindungen bzw. Gespräche angezeigt wird.

Wählt der Benutzer danach bei 30 eine Dreierkonferenz, kann er mit Hilfe der Menütaste 11 ein Menü 31 für Funktionen während der Dreierkonferenz bzw. zu deren Beendigung wählen.

Bei dem in Fig. 2 dargestellten Beispiel wurden in den jeweiligen Menüs nur die für den jeweiligen Zustand typischen Menüpunkte ausgeführt. Es bleibt dem Fachmann unbelassen, im Einzelfall weitere Menüpunkte hinzuzufügen. Ferner wurde bei dem Beispiel nach Fig. 2 davon ausgegangen, daß eine menügeführte Bedienung erst nach Abheben des Hörers bei 21 möglich ist. Diese Einschränkung gilt jedoch nicht für Telefone mit einer eigenen Stromversorgung. Bei diesen Telefonen kann auch ohne Abheben des Hörers das Menü 23 angezeigt und benutzt werden.

## Patentansprüche

1. Telefon für analoge Anschlußleitungen eines Telekommunikationsnetzes mit einem Display, einer als Programm eines Mikroprozessors ausgebildeten Bedienerführung, welche dem Benutzer verschiedene Auswahllisten (Menüs) darbietet, mindestens einer Auswahltaste zur Auswahl eines Menüpunktes und einer Bestätigungstaste zur Aktivierung der durch den ausgewählten Menüpunkt bezeichneten Funktion, **dadurch gekennzeichnet,**
- **daß** vor Wahl einer Rufnummer ein erstes Menü (23) im Display bereitsteht, das Menüpunkte zur Wahlvorbereitung und zur Einstellung verschiedener Parameter des Telefons enthält, und
- **daß** sowohl nach Wahl einer Rufnummer als auch nach Annahme eines Anrufs ein zweites Menü (25) im Display bereitsteht, das unabhängig vom Zustand des Telekommunikationsnetzes Menüpunkte zu Funktionen enthält, die bei besetztem angerufenem Teilnehmer, während des Rufes bei freiem angerufenem Teilnehmer oder während eines Gesprächs ausgewählt werden können.

2. Telefon nach Anspruch 1, **dadurch gekennzeichnet, daß** das jeweils bereitgestellte Menü (23, 25) durch eine Aufruftaste (11) auf dem Display (3) sichtbar gemacht werden kann.

3. Telefon nach Anspruch 2, **dadurch gekennzeichnet, daß** auf dem Display (3) angezeigt wird, welches der Menüs nach Betätigung der Aufruftaste (11) sichtbar wird.

4. Telefon nach einem der vorhergehenden Ansprüche, **dadurch gekennzeichnet, daß** das zweite Menü (25) erst dann bereitsteht, wenn nach Wahl einer Ziffer eine vorgegebene Zeit (T) abgelaufen ist.

5. Telefon nach Anspruch 4, **dadurch gekennzeichnet, daß** das zweite Menü (25) erst bereitsteht, wenn nach Annahme eines Anrufs eine vorgegebene Zeit abgelaufen ist.

6. Telefon nach einem der vorhergehenden Ansprüche, **dadurch gekennzeichnet, daß** ein drittes Menü (27) bereitsteht, wenn eine Rückfrage eingeleitet ist.

7. Telefon nach einem der vorhergehenden Ansprüche, **dadurch gekennzeichnet, daß** nach Wahl einer Rufnummer nach Einleitung einer Rückfrage ein viertes Menü (29) bereitsteht.

8. Telefon nach einem der vorhergehenden Ansprüche, **dadurch gekennzeichnet, daß** nach Einrichtung einer Telefonkonferenz ein fünftes Menü (31) bereitsteht.

9. Telefon nach einem der vorhergehenden Ansprüche, **dadurch gekennzeichnet, daß** durch mindestens eine vorgegebene Taste mindestens ein weiteres Menü aufrufbar ist.

## Claims

1. Telephone for analog subscriber lines of a telecommunications network, having: a display, an operator interface taking the form of a program of a microprocessor and offering various selection lists (menus) to the user, at least one selection button for selecting a menu item, and a confirmation button for activating the function identified by the selected menu item, **characterized in that**
- prior to the dialing of a subscriber number, a first menu (23) containing menu items for preparation for dialing and for setting various parameters of the telephone is available on the display, and
- both after dialing of a subscriber number and after acceptance of a call, a second menu (25) is available on the display which, independent of the state of the telecommunications network, contains menu items for functions that may be selected in the event of a busy called subscriber, during the call to a non-busy called subscriber, or during a conversation.

2. Telephone according to claim 1, **characterized in that** the particular menu (23, 25) provided can be made visible by means of an activation button (11) on the display (3).

3. Telephone according to claim 2, **characterized in that** the display (3) indicates which of the menus will become visible after actuation of the activation button (11).

4. Telephone according to any one of the preceding claims, **characterized in that** the second menu (25) is not made available until after a predetermined time period (T) has elapsed following the dialing of a digit.

5. Telephone according to claim 4, **characterized in that** the second menu (25) is not made available until after a predetermined time period has elapsed following the acceptance of a call.

6. Telephone according to any one of the preceding claims, **characterized in that** a third menu (27) is made available when a call-back is initiated.

7. Telephone according to any one of the preceding claims, **characterized in that** a fourth menu (29) is made available after the dialing of a subscriber number following the initiation of a call-back.

8. Telephone according to any one of the preceding claims, **characterized in that** a fifth menu (31) is made available after the setting up of a conference call.

9. Telephone according to any one of the preceding claims, **characterized in that** at least one additional menu can be invoked by at least one predefined button.

## Revendications

1. Téléphone pour lignes de raccordement analogiques d'un réseau de télécommunications comportant un écran, une surface utilisateur réalisée sous la forme d'un programme de microprocesseur proposant à l'utilisateur plusieurs listes d'options (menus), au moins une touche de sélection pour la sélection d'une option de menu et une touche de confirmation pour l'activation de la fonction désignée par l'option de menu sélectionnée, **caractérisé en ce que**
- avant la composition d'un numéro d'appel, un premier menu (23) est disponible sur l'écran, ledit menu contenant des options pour la préparation de l'appel et pour le réglage des différents paramètres du téléphone, et
- aussi bien après la composition d'un numéro d'appel qu'après l'acceptation d'un appel, un deuxième menu (25) est disponible sur l'écran, ledit menu contenant, indépendamment de l'état du réseau de télécommunications, des options correspondant à des fonctions pouvant être sélectionnées lorsque l'abonné appelé est occupé, en cours d'appel vers un abonné appelé libre ou au cours d'une conversation.

2. Téléphone selon la revendication 1, **caractérisé en ce que** le menu (23, 25) respectivement disponible peut être visualisé à l'écran (3) par l'intermédiaire d'une touche d'activation (11).

3. Téléphone selon la revendication 2, **caractérisé en ce que** l'écran (3) indique lequel des menus sera visualisé après l'actionnement de la touche d'activation (11).

4. Téléphone selon l'une des revendications précédentes, **caractérisé en ce que** le deuxième menu (25) n'est disponible, après la composition d'un chiffre, qu'après écoulement d'un délai prédéterminé (T).

5. Téléphone selon la revendication 4, **caractérisé en ce que** le deuxième menu (25) n'est disponible, après l'acception d'un appel, qu'après écoulement d'un délai prédéterminé.

6. Téléphone selon l'une des revendications précédentes, **caractérisé en ce qu'**un troisième menu (27) est disponible lorsque un double appel est initialisé.

7. Téléphone selon l'une des revendications précédentes, **caractérisé en ce qu'**un quatrième menu (29) est disponible lorsqu'un double appel est initialisé après la composition d'un numéro.

8. Téléphone selon l'une des revendications précédentes, **caractérisé en ce qu'**un cinquième menu (31) est disponible après l'établissement d'une audioconférence.

9. Téléphone selon l'une des revendications précédentes, **caractérisé en ce qu'**au moins un autre menu est disponible par l'intermédiaire d'au moins une touche prédéterminée.
